# EUROPEAN PATENT APPLICATION

(11) **EP 4 624 228 A1**
(43) Date of publication of application: **01.10.2025**
(21) Application number: 25165537.9
(22) Date of filing: 24.03.2025
(51) Int. Cl.: B60L 50/61, B60K 6/46, B60L 50/62, B60W 20/00

(54) **POWER SUPPLY SYSTEM, MOVING OBJECT, AND CONTROL METHOD OF POWER SUPPLY SYSTEM**

(30) Priority: 28.03.2024 JP 2024053544
(71) Applicant: HONDA MOTOR CO., LTD., Tokyo 105-8404 (JP)
(72) Inventor: MATSUMOTO, Takeshi, Saitama-ken, 351-0193 (JP)
(74) Representative: Weickmann & Weickmann PartmbB

(57) **Abstract**

In a power supply system (10), in a case where a target output electric power of a generator (16) that generates electric power by being driven by an engine (14) is 0 [kW], stall prevention control is executed in which an engine torque command value and a generator torque command value are determined so that the generator is brought into a regenerative state.

## Description

### BACKGROUND OF THE INVENTION

### FIELD OF THE INVENTION

The present disclosure relates to a power supply system, a moving object, and a control method of the power supply system.

### DESCRIPTION OF THE RELATED ART

WO 2016/098220 A1 discloses a system for outputting electric power generated by a generator driven by a gas turbine.

### SUMMARY OF THE INVENTION

There has been a demand for a more satisfactory power supply system, a more satisfactory moving object, and a more satisfactory control method of the power supply system.

The present invention has the object of solving the aforementioned problem.

According to a first aspect of the present disclosure, there is provided a power supply system comprising: an engine; a generator configured to generate electric power by being driven by the engine; a power control unit configured to convert alternating current electric power output from the generator into direct current electric power, and output the direct current electric power to a load device and a battery; a management controller configured to determine a target output electric power of the power control unit, and determine an engine torque command value and a generator torque command value in accordance with the target output electric power; an engine controller configured to control the engine based on the engine torque command value; and a power generation controller configured to control the power control unit based on the generator torque command value, wherein, in a case where the target output electric power is 0 kilowatts, the management controller executes stall prevention control for preventing the engine from stalling by setting the engine torque command value and the generator torque command value so as to bring the generator into a regenerative state.

According to a second aspect of the present disclosure, there is provided a moving object comprising the power supply system according to the first aspect.

According to a third aspect of the present disclosure, there is provided a control method of a power supply system, the power supply system including: an engine; a generator configured to generate electric power by being driven by the engine; and a power control unit configured to convert alternating current electric power output from the generator into direct current electric power, and output the direct current electric power to a load device and a battery, the control method comprising: a command value determination step of determining a target output electric power of the power control unit, and determining an engine torque command value and a generator torque command value in accordance with the target output electric power; an engine control step of controlling the engine based on the engine torque command value; and a power generation control step of controlling the power control unit based on the generator torque command value, wherein, in the command value determination step, in a case where the target output electric power is 0 kilowatts, the engine torque command value and the generator torque command value are set in a manner so that the generator is brought into a regenerative state, thereby preventing the engine from stalling.

According to the present disclosure, it is possible to provide a more satisfactory power supply system, a more satisfactory moving object, and a more satisfactory control method of the power supply system.

The above and other objects, features, and advantages of the present invention will become more apparent from the following description when taken in conjunction with the accompanying drawings, in which a preferred embodiment of the present invention is shown by way of illustrative example.

### BRIEF DESCRIPTION OF THE DRAWINGS

FIG. 1 is a schematic diagram of a power supply system according to an embodiment;
FIG. 2 is a diagram explaining variations in output electric power among power generation devices;
FIG. 3 is a diagram explaining stall prevention control; and
FIG. 4 is a flowchart of an engine start process executed by a management controller.

### DETAILED DESCRIPTION OF THE INVENTION

Conventionally, as a power supply system mounted on an electric vertical take-off and landing aircraft (eVTOL aircraft), a power supply system including two power sources, namely, a power generation device and a battery, has been proposed. The power generation device includes an engine and a generator driven by the engine. A diode is provided between the battery and the power generation device, and normally, electric power is supplied from the power generation device to the battery, but is not supplied from the battery to the power generation device.

In a case where the engine is started, a transistor provided in a circuit bypassing the diode is turned on to supply electric power from the battery to the power generation device. The generator is powered by the output electric power of the battery to rotate the engine. After the engine performs self-sustaining rotation and is brought into an idling state, the transistor is turned off to prevent electric power from being supplied from the battery to the power generation device again.

In a period before the time point when the transistor is switched from ON to OFF, when the power generation device is controlled such that the engine is brought into the idling state, the generator may perform power running. In this case, the engine is kept rotating by the assist of the output torque of the generator. If the transistor is turned off in this state, the electric power cannot be supplied from the battery to the power generation device, and the generator cannot perform power running. Therefore, the assist of the output torque of the generator is lost, and the engine may stall.

In the power supply system of the present disclosure described below, after the transistor is turned off after the completion of the start of the engine, the stall of the engine can be suppressed.

### [Embodiment]

### [Configuration of Power Supply System]

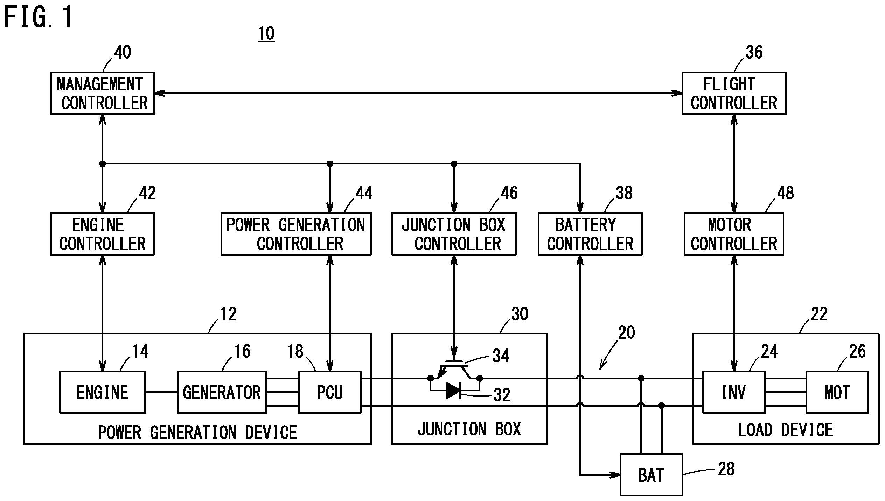

FIG. 1 is a schematic diagram of a power supply system 10 according to an embodiment. The power supply system 10 is mounted on a moving object (not shown). The moving object is an electric vertical take-off and landing aircraft (eVTOL aircraft). The moving object on which the power supply system 10 is mounted is not limited to an eVTOL aircraft, and may be an electric aircraft, an electric automobile, an electric ship, or the like.

The power supply system 10 includes a power generation device 12 as a main power source. The power generation device 12 includes an engine 14, a generator 16, and a power control unit (hereinafter referred to as PCU) 18.

The engine 14 is, for example, a gas turbine engine. The generator 16 is driven by the engine 14 to generate electric power. The PCU 18 converts the AC power generated by the generator 16 into DC power, and outputs the DC power. In a case where the engine 14 is started, the PCU 18 converts the DC power input to the PCU 18 into AC power, and outputs the AC power to the generator 16. The generator 16 is driven by the AC power, and the generator 16 starts the engine 14.

The power generation device 12 may include various sensors such as a voltage sensor and a current sensor, and elements such as a fuse, a relay, a breaker, a contactor, a diode, a transistor, a resistor, a coil, and a capacitor.

The power supply system 10 includes a power supply circuit 20. The power supply circuit 20 supplies, to a load device 22, the DC power output from the power generation device 12.

The load device 22 includes an inverter 24 and an electric motor 26. The inverter 24 converts the DC power input to the inverter 24 into three-phase AC power, and outputs the AC power to the electric motor 26. The load device 22 may include various sensors such as a voltage sensor and a current sensor, and elements such as a fuse, a relay, a breaker, a contactor, a diode, a transistor, a resistor, a coil, and a capacitor.

A battery 28, which serves as an auxiliary power source, is connected to the power supply circuit 20. The battery 28 is, for example, a lithium ion battery.

The power supply system 10 includes a junction box 30. The junction box 30 includes a diode 32, and an insulated gate bipolar transistor (hereinafter, referred to as IGBT) 34. In a case where the IGBT 34 is OFF, the diode 32 prevents a backflow of the current in the power supply circuit 20. The diode 32 corresponds to a backflow prevention element of the present invention. In a case where the IGBT 34 is ON, by bypassing the diode 32, the backflow of the current is allowed in the power supply circuit 20. The junction box 30 may include various sensors such as a voltage sensor and a current sensor, and elements such as a fuse, a relay, a breaker, a contactor, a resistor, a coil, and a capacitor.

The power supply system 10 includes a flight controller 36, a battery controller 38, a management controller 40, an engine controller 42, a power generation controller 44, a junction box controller 46, and a motor controller 48.

Each of the management controller 40, the flight controller 36, the engine controller 42, the power generation controller 44, the junction box controller 46, the battery controller 38, and the motor controller 48 transmits and receives signals via control area network communication.

Each of the flight controller 36, the battery controller 38, the management controller 40, the engine controller 42, the power generation controller 44, the junction box controller 46, and the motor controller 48 includes a computation unit and a storage unit (both of which are not shown).

The computation unit is, for example, a processor such as a central processing unit (CPU) or a graphics processing unit (GPU). The computation unit controls each device by executing a program stored in the storage unit. At least part of the computation unit may be realized by an integrated circuit such as an application specific integrated circuit (ASIC) or a fieldprogrammable gate array (FPGA). At least part of the computation unit may be realized by an electronic circuit including a discrete device.

The storage unit is constituted by a volatile memory (not shown) and a non-volatile memory (not shown) which are computerreadable storage media. The volatile memory is, for example, a random access memory (RAM) or the like. The non-volatile memory is, for example, a read only memory (ROM), a flash memory, or the like. Data and the like are stored in, for example, the volatile memory. Programs, tables, maps, and the like are stored in, for example, the non-volatile memory. At least part of the storage unit may be included in the processor, the integrated circuit, or the like described above.

The flight controller 36 determines a motor torque command value and the like based on, for example, the amount of operation of an operation element performed by a user. Further, the flight controller 36 calculates required electric power of (electric power required by) the load device 22 based on the motor torque command value and the like, and transmits information indicating the required electric power of the load device 22 to the management controller 40.

The battery controller 38 monitors the state of charge (SOC) of the battery 28, an upper limit value of the output electric power of the battery 28, an upper limit value of the input electric power of the battery 28, and the like, and transmits information indicating the state of the battery 28 to the management controller 40. Further, the battery controller 38 calculates required electric power of the battery 28 based on the SOC of the battery 28 and the like, and transmits information indicating the required electric power of the battery 28 to the management controller 40.

The management controller 40 determines a target output electric power of the PCU 18 based on the required electric power of the load device 22, the required electric power of the battery 28, and the like. Further, the management controller 40 determines an engine torque command value, a generator torque command value, and the like based on the target output electric power of the PCU 18. The management controller 40 transmits the engine torque command value to the engine controller 42, and transmits the generator torque command value to the power generation controller 44. Further, the management controller 40 transmits an ON/OFF command for the IGBT 34 to the junction box controller 46.

The engine controller 42 controls the engine 14 based on the engine torque command value and the like. The engine controller 42 monitors the output torque of the engine 14, the rotational speed of the engine 14, and the like, and transmits information indicating the state of the engine 14 to the management controller 40.

The power generation controller 44 controls the PCU 18 based on the generator torque command value and the like. The power generation controller 44 monitors the output torque of the generator 16, the output electric power of the PCU 18, and the like, and transmits information indicating the state of the generator 16 and the state of the PCU 18 to the management controller 40.

The junction box controller 46 controls the IGBT 34 based on the ON/OFF command. The junction box controller 46 monitors the ON/OFF state of the IGBT 34, and the like, and transmits information indicating the state of the IGBT 34 to the management controller 40.

The motor controller 48 controls the inverter 24 based on the motor torque command value and the like sent from the flight controller 36. The motor controller 48 monitors the rotational speed of the electric motor 26, the output torque of the electric motor 26, and the like, and transmits information indicating the state of the electric motor 26 to the management controller 40.

### [Operation at Engine Start]

In order to start the engine 14, the management controller 40 transmits an ON command for the IGBT 34 to the junction box controller 46. The junction box controller 46 turns on the IGBT 34 based on the ON command. By the IGBT 34 being turned on, electric power is supplied from the battery 28 to the power generation device 12.

After the IGBT 34 is turned on, the management controller 40 determines a generator torque command value so that the generator 16 performs power running, and transmits the generator torque command value to the power generation controller 44. The power generation controller 44 controls the PCU 18 based on the generator torque command value to cause the generator 16 to perform power running. The engine 14 is driven by the generator 16.

The management controller 40 determines an engine torque command value so that the engine 14 performs self-sustaining rotation, and transmits the engine torque command value to the engine controller 42. The engine controller 42 controls the engine 14 based on the engine torque command value to cause the engine 14 to perform self-sustaining rotation.

After the completion of the start of the engine 14, the management controller 40 performs stall prevention control on the engine 14 and the PCU 18. In the stall prevention control, the engine torque command value and the generator torque command value are determined so that the generator 16 is brought into a regenerative state and relatively small electric power is output from the PCU 18. The reason why the stall prevention control is performed will be described in detail later.

After the stall prevention control is performed, the management controller 40 transmits an OFF command for the IGBT 34 to the junction box controller 46. The junction box controller 46 turns off the IGBT 34 based on the OFF command. By the IGBT 34 being turned off, the supply of electric power from the battery 28 to the power generation device 12 is stopped.

It should be noted that, in a period from the completion of the start of the engine 14 to the time point when the IGBT 34 is turned off, the required electric power of the load device 22 and the required electric power of the battery 28 are 0 kilowatts ([kW]), and the target output electric power of the PCU 18 is set to 0 [kW].

### [Stall Prevention Control]

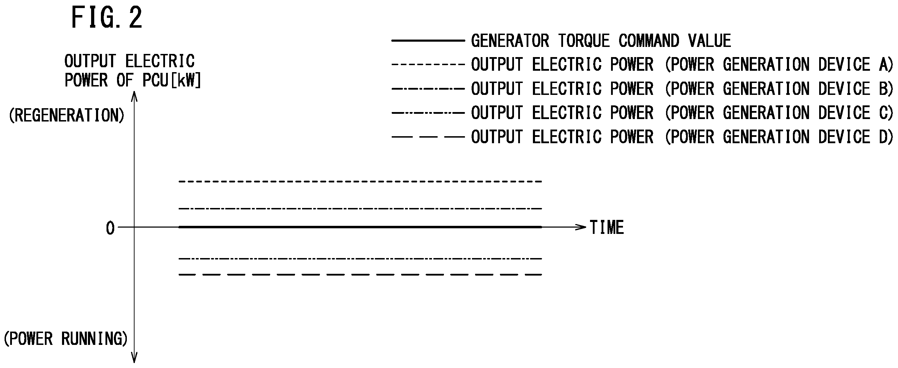

FIG. 2 is a diagram explaining variations in output electric power among the power generation devices 12. FIG. 2 shows the output electric power of the PCU 18 of each of power generation devices A to D when the target output electric power of the PCU 18 is set to 0 [kW].

After a predetermined time has elapsed from the time point when the start of the engine 14 is started, in a case where the rotational speed of the engine 14 is equal to or higher than a predetermined rotational speed, the engine controller 42 determines that the start of the engine 14 has been completed. In a case where the engine controller 42 determines that the start of the engine 14 has been completed, the engine controller 42 transmits information indicating the completion of the start of the engine 14 to the management controller 40.

After the completion of the start of the engine 14, the management controller 40 sets the target output electric power of the PCU 18 to 0 [kW] to bring the engine 14 into an idling state.

In a case where the output electric power of the PCU 18 is 0 [kW], the generator 16 is in a state of rotating together with the engine 14 without performing power running or regeneration. At this time, the engine 14 is in an idling state, and the engine 14 outputs a torque to such an extent that the engine 14 can keep rotating together with the generator 16.

However, even if the target output electric power is set to 0 [kW], the output electric power of the PCU 18 does not actually become 0 [kW], and a difference may occur between the target output electric power and the output electric power of PCU 18. For example, as shown in FIG. 2, the output electric power of the PCU 18 of each of the power generation devices A and B is positive (+), and the generator 16 of each of the power generation devices A and B is regenerating. In this case, the generator 16 works for the battery 28, and the electric power generated by the generator 16 is stored in the battery 28.

On the other hand, as shown in FIG. 2, the output electric power of the PCU 18 of each of the power generation devices C and D is negative (-), and the generator 16 of each of the power generation devices C and D is in power running. In this case, the generator 16 works for the engine 14, and the engine 14 is kept rotating by the assist of the output torque of the generator 16.

In a case where the IGBT 34 is turned off, electric power cannot be supplied from the battery 28 to each of the power generation devices C and D, and the generator 16 of each of the power generation devices C and D cannot perform power running. Therefore, the assist of the output torque of the generator 16 is lost, and the engine 14 cannot keep rotating and may stall.

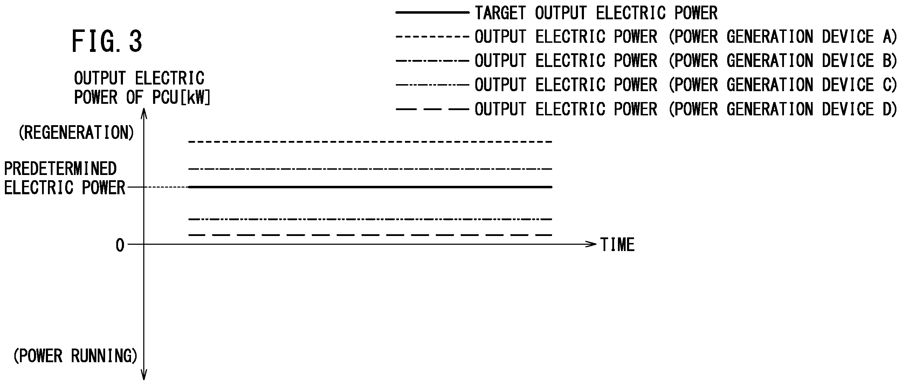

In view of this, in the power supply system 10 of the embodiment, after the completion of the start of the engine 14, the management controller 40 performs the stall prevention control on the engine 14 and the PCU 18. FIG. 3 is a diagram explaining the stall prevention control.

In the power supply system 10 of the embodiment, in a case where the stall prevention control is performed after the completion of the start of the engine 14, the target output electric power of the PCU 18 is set to a predetermined positive electric power as shown in FIG. 3. As a result, the output voltage of each of the power generation devices A to D becomes positive (+). In this case, the generator 16 is a load on the engine 14, but the engine 14 keeps rotating. Therefore, even when the IGBT 34 is turned off, the engine 14 of each of the power generation devices A to D can keep rotating. It should be noted that the predetermined electric power is set based on a manufacturing error of the power generation device 12, and the like.

### [Correction of Torque Command Values]

In the embodiment, the generator 16 and the PCU 18 are initialized prior to installing the generator 16 and the PCU 18 in the power supply system 10. For example, in a case where the PCU 18 is controlled in accordance with the generator torque command value, adjustment is performed in the initialization of the generator 16 and the PCU 18 so that the generator torque command value and the actual output torque of the generator 16 coincide with each other.

Even in a case where the generator 16 and the PCU 18 that have been initialized are installed in the power supply system 10, a difference may occur between the target output electric power of the PCU 18 and the actual output electric power of the PCU 18 as shown in FIG. 2. In the power supply system 10 of the embodiment, the engine torque command value and the generator torque command value are corrected in accordance with the difference between the target output electric power and the output electric power of the PCU 18 generated in a state where the target output electric power is set to 0 [kW].

### [Engine Start Process]

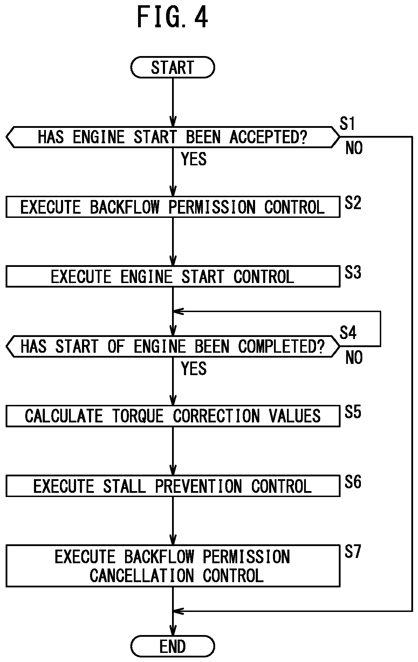

FIG. 4 is a flowchart of an engine start process executed by the management controller 40. The engine start process is repeatedly executed at a predetermined cycle.

In step S1, the management controller 40 determines whether or not an engine start has been accepted. For example, in a case where the user operates a start switch (not shown) or the like, an engine start signal is transmitted to the management controller 40. In the case of receiving the engine start signal, the management controller 40 determines that the engine start has been accepted. In a case where it is determined that the engine start has been accepted (step S1: YES), the process proceeds to step S2. In a case where it is determined that the engine start has not been accepted (step S1: NO), the engine start process is ended.

In step S2, the management controller 40 executes backflow permission control. In a case where the backflow permission control is executed, the management controller 40 transmits an ON command for the IGBT 34 to the junction box controller 46. Thereafter, the process proceeds to step S3.

In step S3, the management controller 40 executes engine start control. In a case where the engine start control is executed, the management controller 40 determines a generator torque command value so that the generator 16 performs power running, and transmits the generator torque command value to the power generation controller 44. Further, in a case where the engine start control is executed, the management controller 40 determines an engine torque command value so that the engine 14 performs self-sustaining rotation, and transmits the engine torque command value to the engine controller 42. Thereafter, the process proceeds to step S4.

In step S4, the management controller 40 determines whether or not the start of the engine 14 has been completed. For example, in a case where the rotational speed of the engine 14 is equal to or higher than a predetermined rotational speed, the management controller 40 determines that the start of the engine 14 has been completed. In a case where it is determined that the start of the engine 14 has been completed (step S4: YES), the process proceeds to step S5. In a case where it is determined that the start of the engine 14 has not been completed (step S4: NO), the process of step S4 is repeated.

In step S5, the management controller 40 sets the target output electric power of the PCU 18 to 0 [kW], and determines the engine torque command value and the generator torque command value based on the target output electric power. The management controller 40 calculates an engine torque correction value and a generator torque correction value based on the difference between the target output electric power and the actual output electric power of the PCU 18 generated in the state where the target output electric power of the PCU 18 is set to 0 [kW]. Thereafter, the process proceeds to step S6.

In step S6, the management controller 40 executes the stall prevention control. Thereafter, the process proceeds to step S7. In a case where the required electric power of the load device 22 is 0 [kW] and the required electric power of the battery 28 is 0 [kW], the target output electric power of the PCU 18 is set to 0 [kW]. However, as described above, in a case where the output electric power of the PCU 18 is set to 0 [kW], the engine 14 may stall after the IGBT 34 is turned off. Therefore, in the stall prevention control, the management controller 40 corrects the target output electric power of the PCU 18 to the predetermined electric power. The management controller 40 sets the engine torque command value and the generator torque command value based on the corrected target output electric power so as to bring the generator 16 into the regenerative state. Thereafter, the process proceeds to step S7.

In step S7, the management controller 40 executes backflow permission cancellation control. In a case where the backflow permission cancellation control is executed, the management controller 40 transmits an OFF command for the IGBT 34 to the junction box controller 46. Thereafter, the engine start process is ended.

After the engine start process is ended, the management controller 40 determines the target output electric power of the PCU 18 based on the required electric power of the load device 22 and the required electric power of the battery 28. The management controller 40 determines the engine torque command value and the generator torque command value based on the target output electric power.

It should be noted that the management controller 40 may determine the engine torque command value and the generator torque command value based on the required electric power of the load device 22 and the required electric power of the battery 28 without determining the target output electric power of the PCU 18.

The management controller 40 corrects the engine torque command value based on the engine torque correction value calculated in step S5, and transmits the corrected engine torque command value to the engine controller 42. Further, the management controller 40 corrects the generator torque command value based on the generator torque correction value calculated in step S5, and transmits the corrected generator torque command value to the power generation controller 44.

In a case where the target output electric power of the PCU 18 is 0 [kW] after the engine start process is ended, the above-described stall prevention control may be executed. In a case where the required electric power of the load device 22 is 0 [kW] and the required electric power of the battery 28 is 0 [kW] after the engine start process is ended, the above-described stall prevention control may be executed.

The following supplementary notes are further disclosed in relation to the above-described embodiment.

### Supplementary Note 1

The power supply system (10) of the present disclosure includes: the engine (14); the generator (16) configured to generate electric power by being driven by the engine; the power control unit (18) configured to convert AC power output from the generator into DC power, and output the DC power to the load device (22) and the battery (28); the management controller (40) configured to determine a target output electric power of the power control unit, and determine an engine torque command value and a generator torque command value in accordance with the target output electric power; the engine controller (42) configured to control the engine based on the engine torque command value; and the power generation controller (44) configured to control the power control unit based on the generator torque command value, wherein, in a case where the target output electric power is 0 [kw], the management controller executes stall prevention control for preventing the engine from stalling by setting the engine torque command value and the generator torque command value so as to bring the generator into a regenerative state. According to this feature, the engine stall can be suppressed.

### Supplementary Note 2

The power supply system according to Supplementary Note 1 may further include the power supply circuit (20) configured to supply output electric power of the power control unit to the load device and the battery, wherein the power supply circuit may include the backflow prevention element (32) configured to prevent a current backflow. According to this feature, the engine stall can be suppressed.

### Supplementary Note 3

In the power supply system according to Supplementary Note 1, in the case where the target output electric power is 0 [kW], the management controller may set the engine torque command value and the generator torque command value in a manner so that the output electric power of the power control unit becomes 0 [kW] and the engine is brought into an idling state, and may execute the stall prevention control after calculating an engine torque correction value and a generator torque correction value in accordance with the difference between the target output electric power and an actual output electric power of the power control unit. According to this feature, the engine stall can be suppressed.

### Supplementary Note 4

The moving object of the present disclosure includes the power supply system according to any one of Supplementary Notes 1 to 3. According to this feature, the engine stall can be suppressed.

### Supplementary Note 5

The control method of the power supply system of the present disclosure is a control method of the power supply system that includes: the engine; the generator configured to generate electric power by being driven by the engine; and the power control unit configured to convert AC power output from the generator into DC power, and output the DC power to the load device and the battery; the control method including: the command value determination step of determining a target output electric power of the power control unit, and determining an engine torque command value and a generator torque command value in accordance with the target output electric power; the engine control step of controlling the engine based on the engine torque command value; and the power generation control step of controlling the power control unit based on the generator torque command value, wherein, in the command value determination step, in a case where the target output electric power is 0 [kw], the engine torque command value and the generator torque command value are set in a manner so that the generator is brought into a regenerative state, thereby preventing the engine from stalling. According to this feature, the engine stall can be suppressed.

In a power supply system (10), in a case where a target output electric power of a generator (16) that generates electric power by being driven by an engine (14) is 0 [kW], stall prevention control is executed in which an engine torque command value and a generator torque command value are determined so that the generator is brought into a regenerative state.

## Claims

1. A power supply system (10) comprising:
an engine (14);
a generator (16) configured to generate electric power by being driven by the engine;
a power control unit (18) configured to convert alternating current electric power output from the generator into direct current electric power, and output the direct current electric power to a load device (22) and a battery (28);
a management controller (40) configured to determine a target output electric power of the power control unit, and determine an engine torque command value and a generator torque command value in accordance with the target output electric power;
an engine controller (42) configured to control the engine based on the engine torque command value; and
a power generation controller (44) configured to control the power control unit based on the generator torque command value,
wherein, in a case where the target output electric power is 0 kilowatts, the management controller executes stall prevention control for preventing the engine from stalling by setting the engine torque command value and the generator torque command value so as to bring the generator into a regenerative state.

2. The power supply system according to claim 1, further comprising a power supply circuit (20) configured to supply output electric power of the power control unit to the load device and the battery, wherein
the power supply circuit includes a backflow prevention element (32) configured to prevent a current backflow.

3. The power supply system according to claim 1, wherein in the case where the target output electric power is 0 kilowatts, the management controller sets the engine torque command value and the generator torque command value in a manner so that output electric power of the power control unit becomes 0 kilowatts and the engine is brought into an idling state, and executes the stall prevention control after calculating an engine torque correction value and a generator torque correction value in accordance with a difference between the target output electric power and an actual output electric power of the power control unit.

4. A moving object comprising the power supply system according to any one of claims 1 to 3.

5. A control method of a power supply system, the power supply system including:
an engine;
a generator configured to generate electric power by being driven by the engine; and
a power control unit configured to convert alternating current electric power output from the generator into direct current electric power, and output the direct current electric power to a load device and a battery,
the control method comprising:
a command value determination step of determining a target output electric power of the power control unit, and determining an engine torque command value and a generator torque command value in accordance with the target output electric power;
an engine control step of controlling the engine based on the engine torque command value; and
a power generation control step of controlling the power control unit based on the generator torque command value,
wherein, in the command value determination step, in a case where the target output electric power is 0 kilowatts, the engine torque command value and the generator torque command value are set in a manner so that the generator is brought into a regenerative state, thereby preventing the engine from stalling.
